# EUROPEAN PATENT SPECIFICATION

(11) **EP 1 321 886 B1**
(45) Date of publication and mention of the grant of the patent: **11.08.2004**
(21) Application number: 02258527.7
(22) Date of filing: 11.12.2002
(51) Int. Cl.: G06K 13/08, H01R 13/24

(54) **Card connector**
Kartenverbinder
Connecteur de carte

(30) Priority: 12.12.2001 JP 2001378602
(43) Date of publication of application: 25.06.2003
(73) Proprietor: Tyco Electronics AMP K.K., Kawasaki, Kanagawa 213-8535 (JP)
(72) Inventor: Ohashi, Chie, Kawasaki, Kanagawa 214-0014 (JP)
(74) Representative: Johnstone, Douglas Ian

(56) References cited:
- EP-A- 0 905 827
- EP-A- 0 965 937
- US-A- 6 024 593
- US-B1- 6 227 893

## Description

### BACKGROUND OF THE INVENTION

### Field of the Invention

The present invention relates to card connectors. In particular, the present invention relates to card connectors that perform wiping between external contact points of a card and contacts of a card connector.

### Description of the Related Art

These types of card connectors, used for recording mediums such as IC cards and SIM cards of portable terminals, are known. For example, a card connector disclosed in U.S. Patent Number 6,227,893 comprises a base, a cover rotatably attached to the base, and a lock bar for engaging the cover when it is pressed down. A card is inserted into the cover, and electrical connections are established between external terminals of the card and contacts provided on the base when the cover is engaged by the lock bar. The lock bar is pivotally supported on the vase so as to be rotatable.

In addition, a guide (card connector) for an IC card is disclosed in Japanese Unexamined Patent Publication Number 11 (1999)-161742. This guide comprises a cover portion for housing an IC card and a base portion for rotatably supporting the cover portion. Electrical connections are established between external terminal of the IC card and contacts provided on the base portion by rotating the cover portion towards the base portion. A card lock portion for locking the IC card and a cover lock portion for locking the cover portion are slidably provided on the base portion.

In the former existing card connector, the cover is engaged with the base by means of the lock bar so that the external terminals of the card and the contacts are connected. However, the contact positions of the external terminals and the contacts do not change. In other words, no wiping occurs between the external terminals and the contacts, so that the external terminals are simply press contacted onto the contacts. In the case that there is a thin film of contaminants formed on the external terminals and/or contacts, there is a possibility that the electrical connections between the external terminals and the contacts will be faulty. In the latter existing card connector, although both the IC card and the cover portion are locked to positively engage the base portion, similar problems of faulty connections exist.

### SUMMARY OF THE INVENTION

The present invention has been developed in view of the above points. It is an object of the present invention to provide a highly reliable card connector that always establishes good electrical connections between external terminals of a card and contacts.

The card connector of the present invention comprises:
a base housing provided with contacts;
a cover pivotally supported at its base end by the base housing so that it is openable and closable;
a card insertion slot provided at a free end of the cover for inserting a card therein such that external contact points of the card are press contacted with the contacts of the base housing by rotating the cover with the card therein towards the base housing;
wherein:
the base housing is provided with a lock member for engaging the free end portion of the cover, movable in an engaging direction and an engagement release direction;
the lock member is mounted on the base housing such that it is normally urged in the engaging direction by a spring; wherein
the lock member is provided with a pressing member for pressing an end portion of the card in the engaging direction so as to cause the card to slide against the cover when the lock member moves in the engaging direction to engage with the cover, for causing wiping to occur between the external contact points of said card and the contacts.

The cover may be provided with a spring for urging the front end of the card in the opposite direction to the inserting direction. In this case, the spring for urging the lock member is stronger than the spring in the cover.

It is preferable that the spring for urging the lock member is a plate spring that extends along a rear surface of the card, in a direction substantially perpendicular to the inserting direction of the card.

The card connector of the present invention is provided with a base housing and a lock member for engaging the free end portion of a cover. The lock member is movably attached on the base housing so that it is movable between an engaging direction and an engagement release direction, while normally being urged by a spring towards the engaging direction. The lock member is provided with a pressing member for pressing an end portion of a card in the engaging direction so as to cause the card to slide against the cover when the lock member moves in the engaging direction to engage with the cover, for causing wiping to occur between the external contact points of the card and the contacts. Therefore, even if contact points between the card and the contacts are dirty, they are cleansed by wiping. Therefore, good electrical contact can always be established, and a card connector with high reliability is obtained.

Further, the cover is provided with a spring for urging the inserted card in the direction opposite the insertion direction. The other spring, for urging the lock member, is stronger than the spring in the cover. Therefore, sliding of the card is positively enabled, assuring the wiping function.

In addition, in the case that the spring for urging the lock member is a plate spring that extends along a rear surface of the card, in a direction substantially perpendicular to the inserting direction of the card, the area occupied by the lock member can be reduced.

### BRIEF DESCRIPTION OF THE DRAWINGS

Figure 1 is a perspective view that shows a connector according to the first embodiment of the present invention.

Figure 2 is a perspective view that shows the connector according to the second embodiment of the present invention.

Figure 3 is an exploded perspective view of the connector of Figure 1.

Figure 4 is a perspective view of the bottom of the connector of Figure 2.

Figure 5 shows partial magnified views of the locking operation of the cover, wherein:

Figure 5A shows the state in which the cover is in contact with the lock bar;

Figure 5B shows the state in which the cover and the lock bar are in cam engagement;

Figure 5C shows the state in which the cover is being pressed further downward after cam engaging with the lock bar; and

Figure 5D shows the state in which the cover is completely engaged by the lock bar, and the card is pressed by the lock bar.

### DESCRIPTION OF THE PREFERRED EMBODIMENTS

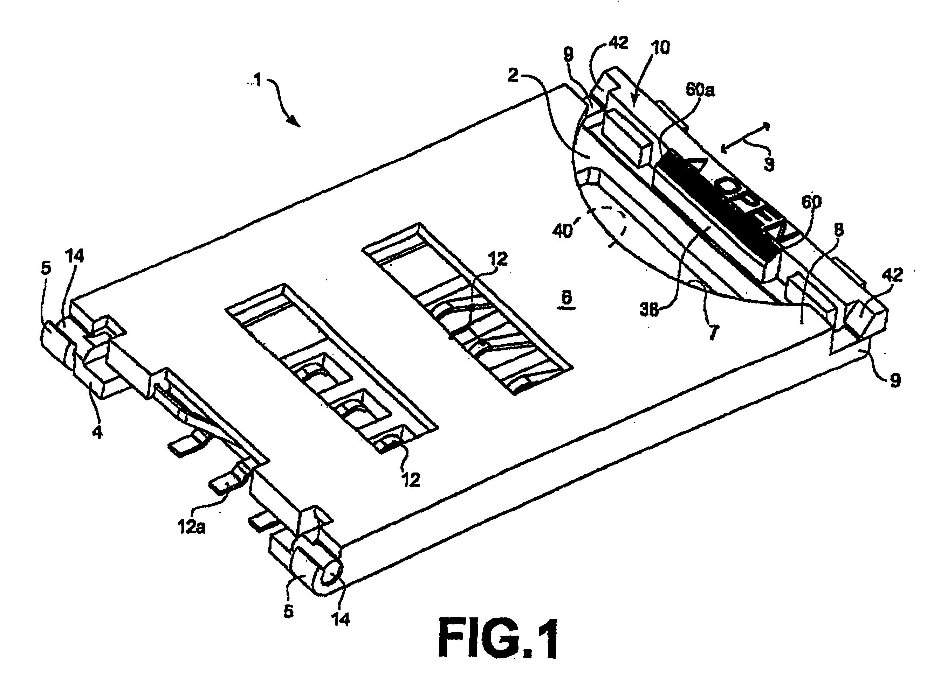

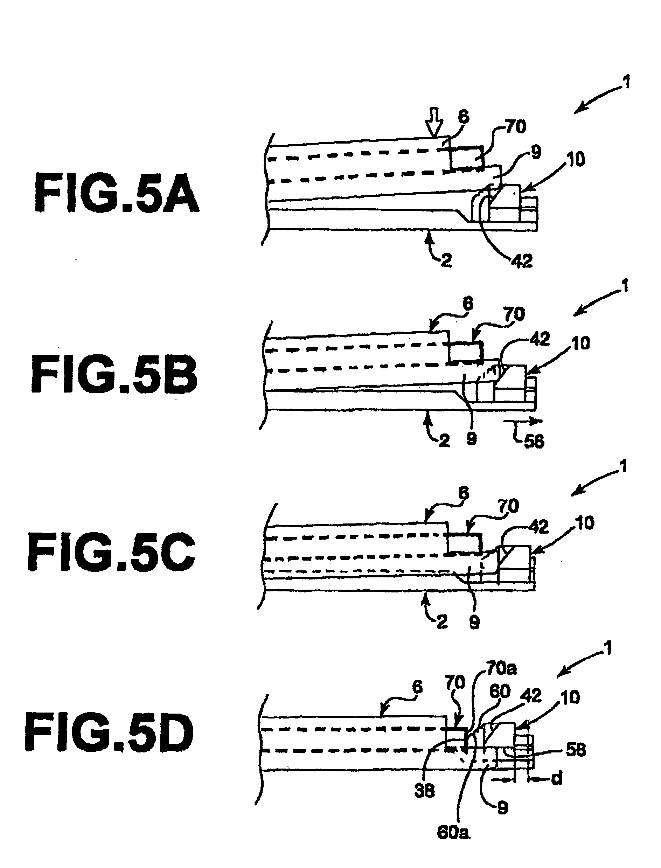

Hereinafter, the preferred embodiments of the card connector (hereinafter referred to simply as "connector") of the present invention will be described with reference to the attached figures. Figure 1 is a perspective view that shows a connector 1 according to the first embodiment of the present invention. As shown in Figure 1, the connector 1 comprises a substantially rectangular base housing 2 to be attached to a circuit board (not shown), and a cover 6 rotatably attached to the base housing 2 so as to be openable and closable. In the present embodiment, the base housing 2 and the cover 6 are formed of resin. A card 70 (Figure 5), such as a SIM (Subscriber Identity Module) card, is inserted within the cover 6 through a card insertion slot 40.

A pair of outwardly facing shafts 14 is protrusively provided at a base end 4 of the base housing 2 in the direction perpendicular to an insertion direction 3 of the card 70 and along the base end 4 of the base housing 2. A pair of shaft receiving portions 5 is provided for receiving the shafts 14 therein at an end of the cover 6 corresponding to this base end 4. The shaft receiving portions 5 are rotatably mounted on the shafts 14 by engagement. A plurality of contacts 12 is provided on the base housing 2, for contacting external terminals (not shown) of the card 70. A curved cutout 7 is provided at the free end portion 8 of the cover 6, to enable insertion of a finger therethrough when the card 70 is to be removed. The free end portion 8 is configured so that it becomes fixed by a lock bar (lock member) 10 engaging with an engagement protrusion 9 when the cover 6 is rotated to close the housing 2. The state shown in Figure 1 is that in which the cover 6 is completely closed with respect to the housing 2, and locked by the lock bar 10. The connector is structured so that the external terminals of the card 70 electrically contact the contacts 12 in this state.

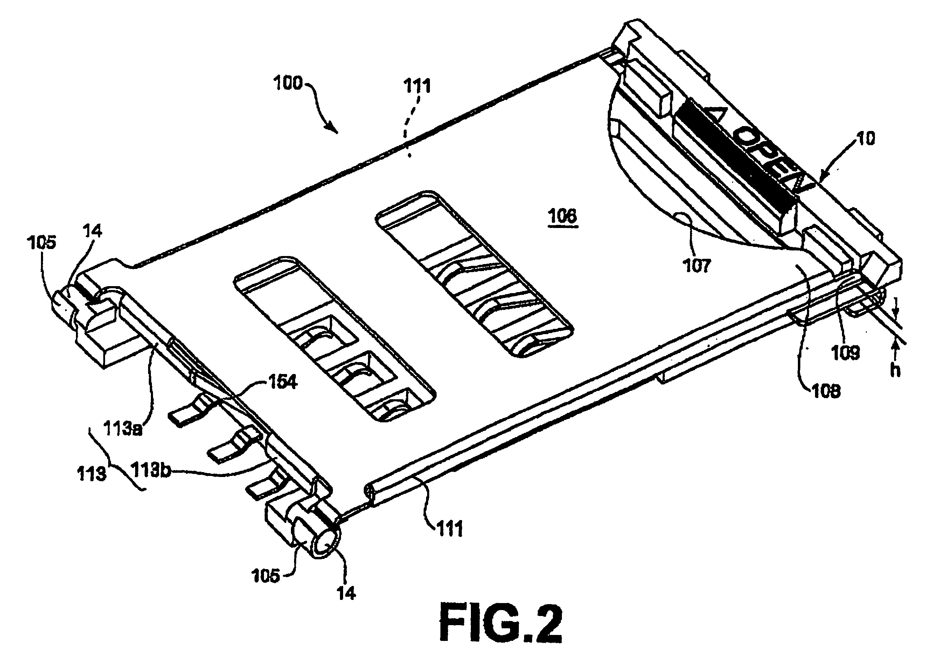

A schematic description of the connector 1 according to the first embodiment has been given above. Next, a connector according to the second embodiment of the present invention will be described with reference to Figure 2. Note that with regard to the description, the same reference numerals will be used to indicate the same parts. Figure 2 is a perspective view showing the connector 100 according to the second embodiment. The connector 100 differs from the connector 1 in that a cover 106 thereof is a metal plate. The outward form of the cover 106 is similar to that of the connector 1 shown in Figure 1, and it has a cutout 107. Shaft receiving portions 105 for receiving the shafts 14 of the base housing 2 are formed at the end portion of the cover 106 by punching out and bending the metal plate.

Both lateral edges of the cover 106 are bent downward, and constitute side walls 111, 111 for covering the lateral edges of the base housing 2. In addition, portions of the side walls 111 on the side of the free end portion 108 of these side walls 111 extend outward to form engagement protrusions 109 bent in a U shape beneath the lock bar 10. The height h of the engagement protrusions 109 is the same as that of the engagement protrusions 9 of the connector 1 according to the first embodiment. By this construction, the same lock function as that of the connector 1 according to the first embodiment is obtained. That is, the engagement protrusions 109 are engaged by the lock bar 10, to lock the cover 106 to the base housing 2.

In addition, a pair of downwardly projecting tongue pieces 113 (113a, 113b) are formed by bending at the end of the cover 106 on the side of the shaft receiving portions 105. These tongue pieces 113 act as stoppers for when the card 70 is inserted excessively. A plate spring 154 inclined toward the interior is integrally formed with the tongue piece 113a. This plate spring 154, in the same manner as a plate spring 54 to be described later, abuts the distal end of the card 70 which is inserted, and has the function of slightly pushing the card 70 back. The details will be described later.

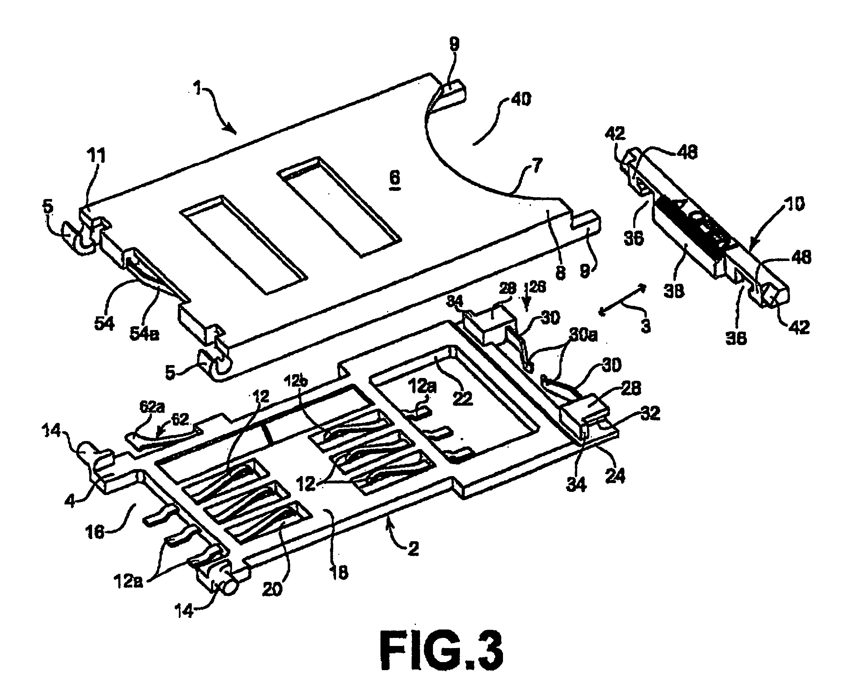

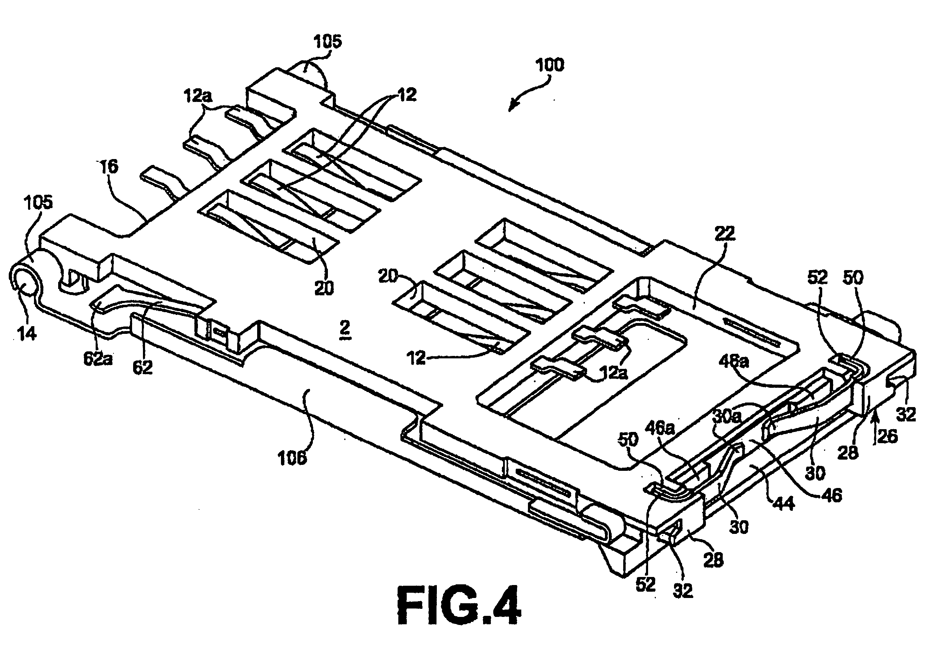

The first embodiment and the second embodiment are basically of the same construction excluding the cover. Therefore, the structures thereof will be described in further detail based on the first embodiment, with reference to Figure 3. In addition, to describe the mounting state of the base housing 2 and the lock bar 10, a description will be given with reference to Figure 4. Figure 3 is an exploded perspective view of the connector 1 of Figure 1. Figure 4 is a perspective view of the bottom of the connector 100 of Figure 2.

As shown in Figure 3, the shafts 14 of the base housing 2 are integrally formed with the base housing 2 so that they protrude outward toward the sides thereof. In addition, a cutout 16 for arranging tines 12a of the contacts 12 is formed on the side of the base end 4 of the base housing. Six openings 20 that extend in the lengthwise direction of the base housing 2 are formed on the main surface 18 of the base housing 2. The contacts 12 are insert molded to the base housing 2 in an arrangement so that contact portions 12b thereof protrude within the openings 20. The contacts 12 are formed of a metal having elasticity. The contacts 12 curve upward and protrude past the main surface 18. These protruding portions 12b become the contact points with the external terminals of the card 70.

The tines 12a of the contacts 12 protrude through the cutout 16 and an opening 22 formed adjacent to the openings 20, away from the cutout 16. The tines 12a are surface mounted to a circuit board (not shown) . A support portion 26 for slidably supporting the lock bar 10 is constructed at an end 24 opposite the base end 4. The support portion 26 comprises a pair of horizontally separated rails 28 formed as blocks, and a pair of plate springs 30 protrusively provided from the interior sides of the rails 28 so as to face each other. Grooves 32 that extend rearward and are open to the sides are formed on each of the rails 28. In addition, the plate springs 30 are press fit into the rails 28. The front end portion of the plate springs 30 are bent slightly forward. Note that here, front refers to the direction in which the card is inserted. The grooves 32 of the rails 28 extend to stop portions 34.

The lock bar 10 is a rod shaped member formed of resin that extends between the rails 28, and has a pair of guide grooves 36, 36 for receiving the rails 28 therein. The shape of the guide grooves 36 is complementary to the cross sectional form of the rails 28. The lock bar 10 is configured to be slidably guided by the rails 28 in the insertion direction 3 of the card. A press portion 38 for pressing the card 70 is provided at the card insertion opening 40 of the cover 6, that is, facing the end of the card 70, between the guide grooves 36. In addition, a pair of cam surfaces 42, 42 facing the card insertion opening 40 is formed at both ends of the lock bar 10. These cam surfaces 42, 42 cam engage with the engagement protrusions 9 of the cover 6 to slide the lock bar 10. The details thereof will be described later.

As shown in Figure 4, a recess 44 extending along the lock bar 10 is formed on the bottom surface thereof so that it is open downwardly and to the rear. As shown in Figure 4, the plate springs 30 are housed within this recess 44. The lock bar 10 is urged forward, that is, in the direction that pushes the card 70 into the cover 6 by the tips 30a of the plate springs 30 pressing a rear surface 46 of the lock bar 10 forward. An abutment surface 48 of the lock bar 10 abuts the stop portions 34 of the rails 28 by the lock bar 10 being urged forward. The lock bar 10 is normally in this abutment state.

In addition, when the lock bar 10 moves backward by cam engaging the cover 6, protrusions 46a on the rear surface 46 of the lock bar 10 abut the plate springs 30, to restrict the movement. As shown in Figure 4, the plate springs 30 are fixed by having their L shaped attachment ends 52 press fit within a pair of L shaped grooves 50, formed on the bottom surface of the base housing 2. In this manner, the plate springs 30 extend along a rear surface 70a of the card 70. Therefore, the region occupied by the lock member 10 can be made small.

The plate spring 54 that the distal end of the card 70 to be inserted abuts is mounted at an end 11 of the cover 6 by press fitting or the like. The tip 54a of the plate spring 54 is bent toward the interior of the cover 6, and presses the distal end of the inserted card 70 so as to urge it backward. By this construction, when there is no force applied to the card 70 in the insertion direction, the card 70 protrudes slightly from the card insertion opening 40, therefore facilitating removal thereof by a finger, in cooperation with the cutout 7. However, when the cover 6 is locked, the card 70 is pressed in the insertion direction by the lock bar 10 so that it is in a predetermined position. This is because the spring rate of the plate spring 30 is far greater than the spring rate of the plate spring 54. These spring rates are set so that the ratio of the spring rates of the plate spring 54 and the plate spring 30 are approximately 3:40. The ratio of the spring rates is not limited to this numerical value. So long as the plate spring 30 has a sufficiently large spring rate with respect to the plate spring 54, any value may be employed.

Note that the element 62 in Figure 3 denotes a popup spring having one end fixed to the base housing 2. This popup spring 62 has a free end 62a in the vicinity of the base end 4 of the base housing. The free end 62a is inclined so as to urge upward. This free end 62a abuts the interior surface of the cover 6 in the vicinity of its end 11 when the cover 6 closes the base housing 2, so as to urge the cover 6 upward. Accordingly, when the engagement between the cover 6 and the lock bar 10 is released, the free end 8 of the cover 6 pops up with the shafts 14 as its pivot point. This is the same for the first and the second embodiments.

Next, the locking operation of the cover 6 will be described. Figure 5 shows partial magnified views of the locking operation of the cover 6, wherein: Figure 5A shows the state in which the cover 6 is in contact with the lock bar 10; Figure 5B shows the state in which the cover 6 and the lock bar 10 are in cam engagement; Figure 5C shows the state in which the cover 6 is being pressed further downward after cam engaging with the lock bar 10; and Figure 5D shows the state in which the cover 6 is completely engaged by the lock bar 10, and the card is pressed by the lock bar 10.

As shown in Figure 5A, the cover 6 housing the card 70 therein is pressed down towards the base housing 2 by being rotated around the shafts 14. At this time, the engagement protrusions 9 of the cover contacts the cam surfaces 42 of the lock bar 10, which is being urged forward, that is, in the card insertion direction, by the plate springs 30. When the cover 6 is pressed further downward, the engagement protrusions 9 cam engage with the cam surfaces 42, and the lock bar 10 moves backward in the direction indicated by arrow 56, against the force of the plate springs 30 as shown in Figure 5B. When the cover 6 is pressed still further downward, the engagement protrusions 9 disengage from the cam surfaces 42 and press the lower ends of the cam surfaces 42 to move the lock bar 10 to its rearmost position. When the cover 6 is pressed still yet further downward, the engagement protrusions 9 pass under the lower ends of the cam surfaces 42 to be under an engagement surface 58 of the lock bar 10. The lock bar 10 moves back in the insertion direction of the card 70 by spring force, thereby locking the cover 6.

What is important at this time is that the pressing portion 38 of the lock bar 10 presses the rear surface (end) 70a of the card 70 against the force of the plate spring 54 to move the card 70 slightly. The amount of movement d is approximately 0.5mm. This movement generates wiping between the external terminals of the card 70 and the contacts 12. By this wiping being performed, in the case that the portions of the external terminals or the contacts 12 that contact each other, that is, the contact points, were dirty, the dirt is removed. The wiping exposes a clean metallic surface to enable good electrical connections.

To remove the card 70 from the connector 1, a finger is placed on a finger placing portion 60, formed on the upper part of the pressing portion 38 of the lock bar. The lock bar is slid in the direction opposite the insertion direction of the card 70 to release the engagement between the lock bar 10 and the engagement protrusions 9 of the cover 6. Then, the popup mechanism causes the cover 6 to pop up. At the same time, the card 70 is pushed out from the card insertion opening 40 by the plate spring 54, facilitating removal of the card 70. A plurality of grooves (steps) 60a is formed on the finger placing portion 60 so as to prevent slippage.

The connectors 1 and 100 of the present invention have been described in detail above. However, the present invention is not limited to the above embodiments, and it goes without saying that various modifications are possible. For example, the lock bar 10 may, instead of being slidable, be provided so that is rotatably mounted to the cover 6. In this case, the same effects as the above embodiments can be obtained by pressing the card 70 when the cover 6 is locked. In addition, the plate springs 30 and 54 may alternatively be coil springs or torsion springs.

## Claims

1. A card connector (1) comprising:
a base housing (2) provided with contacts (12);
a cover (6) pivotally supported at its base end (11) by said base housing (2) so that it is openable and closable;
a card insertion slot (40) provided at a free end (8) of said cover (6) for inserting a card (70) therein such that external contact points of said card (70) are press contacted with said contacts (12) of said base housing (2) by rotating said cover (6) with said card (70) therein towards said base housing (2); wherein
said base housing (2) is provided with a lock member (10) for engaging said free end portion (8) of said cover (6), movable in an engaging direction and an engagement release direction;
said lock member (10) is mounted on said base housing (2) such that it is normally urged in said engaging direction by a spring (30); **characterized in that**
said lock member (10) is provided with a pressing member (38) for pressing an end portion (70a) of said card (70) in said engaging direction so as to cause said card (70) to slide against said cover (6) when said lock member (10) moves in said engaging direction to engage with said cover (6), for causing wiping to occur between said external contact points of said card (70) and said contacts (12).

2. A card connector (1) as defined in claim 1, further comprising:
a spring (54) provided in said cover (6) for urging the front end of said card (70) in the opposite direction to the inserting direction; wherein
said spring (30) for urging said lock member (10) is stronger than said spring (54) in said cover (6).

3. A card connector as defined in claim 1 or 2 wherein said spring (30) for urging said lock member (10) is a plate spring that extends along a rear surface (70a) of said card (70), in a direction substantially perpendicular to the inserting direction of said card (70).

## Patentansprüche

1. Kartenverbinder (1), der Folgendes umfasst:
ein Basisgehäuse (2), das mit Kontakten (12) versehen ist;
einen Deckel (6), der an seinem Basisende (11) von dem Basisgehäuse (2) schwenkbar gelagert wird, so dass er geöffnet und geschlossen werden kann;
einen Karteneinführschlitz (40), der an einem freien Ende (8) des Deckels (6) vorgesehen ist, um eine Karte (70) darin einzuführen, so dass externe Kontaktstellen der Karte (70) in Kontakt mit den Kontakten (12) des Basisgehäuses (2) gedrückt werden, wenn der Deckel (6) mit der Karte (70) darin in Richtung auf das Basisgehäuse (2) gedreht wird; wobei
das Basisgehäuse (2) mit einem Arretierelement (10) versehen ist, das die Aufgabe hat, in den freien Endabschnitt (8) des Deckels (6) einzugreifen, und das in einer Eingriffsrichtung und einer Eingriffslöserichtung bewegt werden kann;
das Arretierelement (10) so auf dem Basisgehäuse (2) montiert ist, dass es normalerweise von einer Feder (30) in die Eingriffsrichtung gedrängt wird;
**dadurch gekennzeichnet, dass** das Arretierelement (10) mit einem Drückelement (38) versehen ist, um einen Endabschnitt (70a) der Karte (70) in die Eingriffsrichtung zu drücken, um zu bewirken, dass die Karte (70) über den Deckel (6) gleitet, wenn sich das Arretierelement (10) in die Eingriffsrichtung bewegt, um in den Deckel (6) einzugreifen, so dass eine Wischaktion zwischen den externen Kontaktpunkten der Karte (70) und den Kontakten (12) erzielt wird.

2. Kartenverbinder (1) nach Anspruch 1, der ferner Folgendes umfasst:
eine Feder (54), die in dem Deckel (6) vorgesehen ist, um das vordere Ende der Karte (70) in die der Einführrichtung entgegengesetzte Richtung zu drängen; wobei
die Feder (30) zum Drängen des Arretierelementes (10) stärker ist als die Feder (54) in dem Deckel (6).

3. Kartenverbinder nach Anspruch 1 oder 2, wobei die Feder (30) zum Drängen des Arretierelementes (10) eine Blattfeder ist, die entlang einer Rückseite (70a) der Karte (70) in einer Richtung im Wesentlichen lotrecht zur Einführrichtung der Karte (70) verläuft.

## Revendications

1. Connecteur de carte (1), comprenant:
un boîtier de base (2) comportant des contacts (12);
un couvercle (6) supporté par pivotement au niveau de son extrémité de base (11) par ledit boîtier de base (2), de sorte à pouvoir être ouvert et fermé;
une fente d'insertion d'une carte (40) agencée au niveau d'une extrémité libre (8) dudit couvercle (6), pour y insérer une carte (70), de sorte que les doigts de contact externes de la carte (70) sont mis en contact par pression avec lesdits contacts (12) dudit boîtier de base (2) par suite de la rotation dudit couvercle (6) contenant ladite carte (70) vers ledit boîtier de base (2); dans lequel:
le boîtier de base (2) comporte un élément de verrouillage (10) destiné à s'engager dans ladite partie d'extrémité libre (8) dudit couvercle (6), pouvant être déplacé dans une direction d'engagement et une direction de dégagement;
ledit élément de verrouillage (10) est monté sur ledit boîtier de base (2) de sorte à être normalement poussé dans ladite direction d'engagement par un ressort (30);
**caractérisé en ce que** l'élément de verrouillage (10) comporte un élément de pression (38), destiné à presser une partie d'extrémité (70a) de ladite carte (70) dans ladite direction d'engagement, de sorte à entraîner le glissement de ladite carte (70) contre ledit couvercle (6) lorsque ledit élément de verrouillage (10) se déplacé dans ladite direction d'engagement en vue d'un engagement dans ledit couvercle (6), pour entraîner un frottement entre les doigts de contact externes de ladite carte (70) et lesdits contacts (12).

2. Connecteur de carte (1) selon la revendication 1, comprenant en outre:
un ressort (54) agencé dans ledit couvercle (6) pour pousser l'extrémité avant de ladite carte (70) dans la direction opposée à la direction d'insertion; dans lequel
ledit ressort (30) destiné à pousser ledit élément de verrouillage (10) est plus puissant que ledit ressort (54) dans ledit couvercle (6).

3. Connecteur de carte selon les revendications 1 ou 2, dans lequel ledit ressort (30) destiné à pousser ledit élément de verrouillage (10) est un ressort à lames s'étendant le long d'une surface arrière (70a) de ladite carte (70), dans une direction pratiquement perpendiculaire à la direction d'insertion de ladite carte (70).
